Europäisches Patentamt

(19) European Patent Office

Office européen des brevets

(11) EP 0 698 439 B1

(12) EUROPEAN PATENT SPECIFICATION

(45) Date of publication and mention
of the grant of the patent:
25.11.1998 Bulletin 1998/48

(51) Int. Cl.⁶: **B23H 1/02**

(21) Application number: 95117591.8

(22) Date of filing: 05.01.1993

(54) **Electrical discharge machine and machining method therefor**

Verfahren und Vorrichtung zum Funkenerosionsbearbeiten

Procédé et appareil d'usinage par étincelage

(84) Designated Contracting States:
CH DE LI

(30) Priority: 07.01.1992 JP 786/92
17.02.1992 JP 29711/92
20.11.1992 JP 311963/92

(43) Date of publication of application:
28.02.1996 Bulletin 1996/09

(62) Document number(s) of the earlier application(s) in
accordance with Art. 76 EPC:
93100068.1 / 0 551 091

(73) Proprietor:
MITSUBISHI DENKI KABUSHIKI KAISHA
Tokyo 100 (JP)

(72) Inventors:
• Goto, Akihiro,
c/o Mitsubishi Denki K.K.,
Nagoya
Nagoya-shi, Aichi 461 (JP)
• Ozaki, Yoshio,
c/o Mitsubishi Denki K.K.,
Nagoya
Nagoya-shi, Aichi 461 (JP)
• Taneda, Atsushi,
c/o Mitsubishi Denki K.K.,
Nagoya
Nagoya-shi, Aichi 461 (JP)
• Sato, Tatsushi,
c/o Mitsubishi Denki K.K.,
Sangyo
Amagasaki-shi, Hyogo 661 (JP)
• Imai, Yoshihito,
c/o Mitsubishi Denki K.K.,
Sangyo
Amagasaki-shi, Hyogo 661 (JP)

(74) Representative:
Ritter und Edler von Fischern, Bernhard, Dipl.-
Ing. et al
Hoffmann Eitle,
Patent- und Rechtsanwälte,
Arabellastrasse 4
81925 München (DE)

(56) References cited:
DE-A- 3 327 900          FR-A- 2 099 228
US-A- 4 322 595

• PATENT ABSTRACTS OF JAPAN vol. 011, no.
296 (M-627), 25 September 1987 & JP-A-62
088514 (FANUC LTD), 23 April 1987,

## Description

### BACKGROUND OF THE INVENTION

#### 1. Field of the Invention

The present invention relates to an electrical discharge machining method and an electrical discharge machine.

#### 2. Description of the Background Art

In electrical discharge machining, a machining status must be detected and controlled to avoid the damage to workpiece surfaces caused by the generation of arc discharges. In an electrical discharge machine known in the art, an average voltage and current in a machining gap formed by a machining electrode and a workpiece opposed to each other were detected and the electrode position was adjusted to maintain the machining status. However, since it is difficult to avoid the generation of arc discharges only by detecting the average machining status of the machining gap, the workpiece is machined under machining conditions biased toward a considerably safe side. To improve the machining performance of the electrical discharge machine, the discharge status must be detected every electrical discharge and the optimum machining status maintained.

It is known that high frequency components overlap a voltage waveform, a current waveform and a gap impedance waveform during a normal discharge and they do not overlap the same during a faulty discharge. By utilizing this principle, a device for detecting a discharge status every electrical discharge has been devised. A device for separating these high frequency components with a high-pass filter and judging whether a discharge is normal or faulty is disclosed, for example, in Japanese Laid-Open Patent Publication No. SHO47-13795.

Fig. 4 shows an example of such conventional electrical discharge machine, wherein the numeral 1 indicates a machining power supply, 2 denotes an electrode, 3 represents a workpiece, 4 designates low frequency intercepting means, e.g., a high-pass filter, 5 indicates a rectifier, 35, 36 and 37 represent Schmidt circuits which are different in inverse voltage from each other, 38 denotes a switch, and 7 designates a discharge status display device.

Operation will now be described. Only while the machining power supply 1 applies a voltage to a machining gap, the switch 38 causes the voltage value of the machining gap to pass through the high-pass filter 4. The output of the high-pass filter 4 is rectified by the rectifier 5, segmented at a plurality of levels by the plurality of Schmidt circuits 35, 36, 37, and digitally displayed as a signal indicating a discharge status.

In the conventional electrical discharge machine which operates as described above, since the output of the high-pass filter 4 oscillates finely around approximately 0V, the output of the rectifier 5 oscillates finely between 0V and a maximum amplitude value. Accordingly, even the Schmidt circuits cannot prevent the discharge status output from making frequent changes and, in fact, the discharge status cannot be identified accurately.

Also, as the present inventors determined, high frequency components occurred immediately after the start of a discharge, independently of whether the discharge is normal or faulty. Thus, the conventional electrical discharge machine would determine a deteriorated discharge status as normal because the discharge status was detected over a whole discharge period.

Further, if a short circuit takes place at the machining gap, the amount of high frequency components generated depends on the degree of the short circuit. The deterioration of the discharge status and the occurrence of the short circuit are essentially different from each other and must be treated differently. However, since the discharge status is only judged according to the magnitude of high frequency components in the conventional electrical discharge machine, the discharge status is judged and machining conditions are controlled independently of whether a short circuit exists or not.

US 4,322,595 discloses an apparatus for monitoring electrical discharge machining, in which the voltage across the machining gap between an electrode and a workpiece is compared to two reference voltage levels. The first reference voltage level is below the range of discharge voltage levels, and the second reference voltage level is above the range of discharge levels. Discharge detecting means generate a discharge indicating signal solely when the voltage across the machining gap falls between the first and second reference voltage level. Therefore, a discharge is regarded as occurring if the gap voltage is substantially above a gap short-circuit voltage but substantially below a gap open circuit voltage which is ensured by the adjustment of the two reference voltage levels.

GB-A 62-88514 describes an electrode feed controller for electric discharge machining which detects an electric-discharge voltage, corrects it, and then compares the corrected voltage with a standard voltage A in order to generate a differential signal which is then used for electrode feed starting instructions.

FR-A 2 099 228 describes an arc detecting apparatus for the use in an electrical discharge machine which detects a voltage at the machining gap and compares it with a reference voltage $V_{ref}$.

The devices disclosed in the prior art compare the detected voltage at the machining gap with reference values or thresholds only. As the voltage waveform at the machining gap contains valuable information indicating a premonitory phenomenon that machining will be instable, it appears that when the voltage detected at the machining gap is compared with reference values as in the devices described above, the information contained in the waveform of the voltage at the machining gap will be lost and a premonitoring of the machining status becomes impossible.

It is, accordingly, an object of the present invention to overcome the disadvantage in the conventional art by providing an electrical discharge machining apparatus and a method therefor which allows the detection of an instable machining status in an early stage.

This object of the invention is solved by an electrical discharge machine with the features of claim 1.

The electrical discharge machine according to the present invention recognizes the invention shape of the discharge voltage, discharge current or impedance to eliminate disturbance attributable to the transient characteristic of the low frequency intercepting means or high frequency intercepting means.

Further embodiments and advantages of the present invention become apparent from the dependent claims.

## BRIEF DESCRIPTION OF THE DRAWINGS

Fig. 1 is a block diagram illustrating a preferred embodiment of the invention.

Fig. 2 illustrates the process of sampling in the invention.

Fig. 3 illustrates discharge voltage waveforms provided to further describe a preferred embodiment of the invention.

Fig. 4 is an arrangement diagram of an electrical discharge machine known in the art.

## DESCRIPTION OF THE PREFERRED EMBODIMENTS

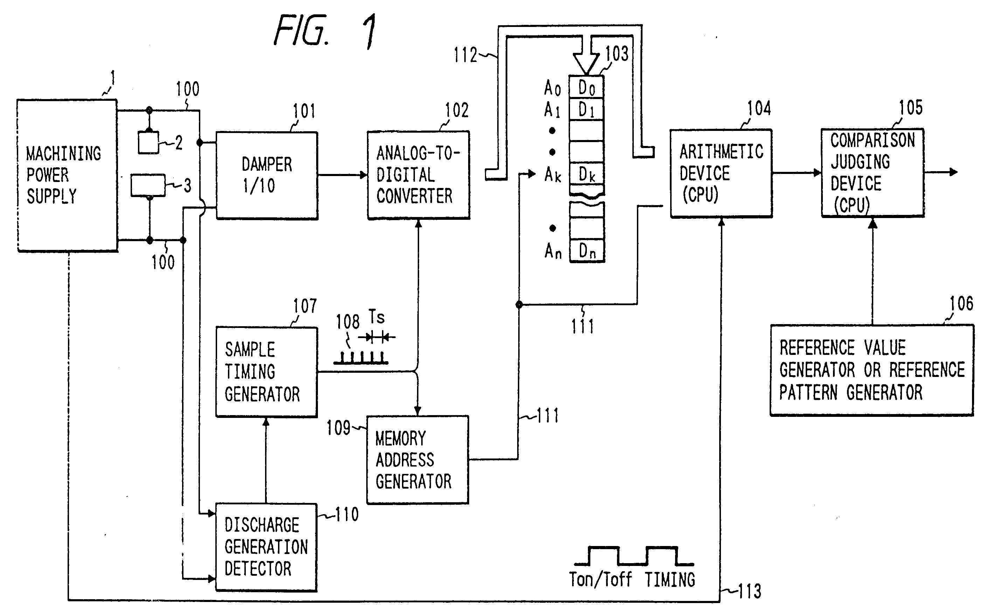

Fig. 1 is an arrangement diagram of a preferred embodiment of the invention. In Fig. 1, 1 indicates a machining power supply, 2 designates an electrode, 3 denotes a workpiece, 100 represents a detection cable, 101 indicates a damper, 102 denotes an analog-to-digital converter serving as analog-to-digital convert means, 103 represents a storage device, 104 indicates an arithmetic device (CPU) acting as arithmetic means, 105 denotes a comparator (CPU) acting as comparing means, 106 designates a reference value or reference pattern generator serving as reference value or reference pattern generating means, 107 represents sample timing generator, 108 indicates sample timing Ts, 109 represents memory address generator, 110 denotes discharge generation detector, 111 designates address buses, 112 indicates a data bus of the storage device, and 113 denotes a discharge pulse Ton/Toff timing signal. Electrical discharge machining is generally carried out in dielectric, which is omitted in Fig. 1.

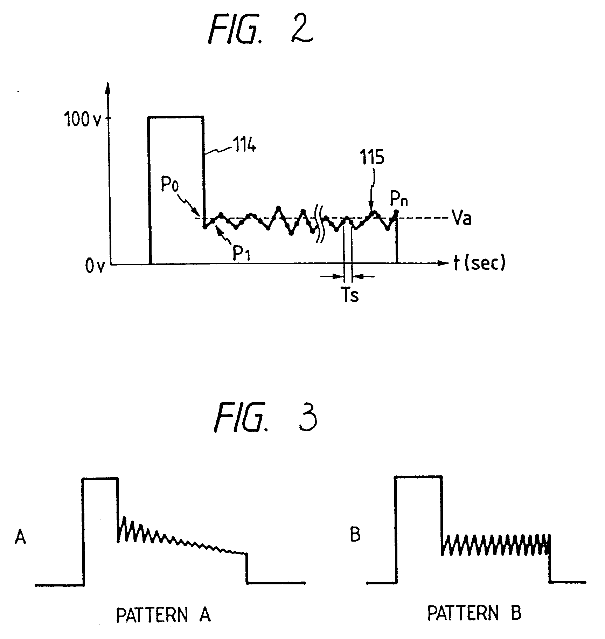

Operation will now be described. A discharge voltage generated at the machining gap is connected to the damper 101 by the detection cable 100, and the damper 101 damps the discharge voltage waveform to, for example, 1/10, i.e., damps the input voltage of 100V to 10V, and outputs it. On detection of a discharge at the machining gap, the discharge generation detector 110 outputs a signal. On receiving this signal, the sample timing generator 107 generates the sample timing signal 108 of cycle Ts. The analog-to-digital converter 102 samples the output waveform of the damper 101 in synchronization with the sample timing signal 108 and converts it into a digital value. The memory address generator 109 consisting of a counter adds the sample timing signals 108 in sequence and generates memory addresses (A0, A1 to An). Fig. 2 illustrates the process of sampling, wherein 114 indicates a discharge voltage waveform of which time axis is shown expanded for ease of understanding. 115 denotes sampling points P0, P1 to Pn and Ts represents a sampling cycle. When a circuit is arranged so that one bit of the analog-to-digital converter 102 is weighted to be 0.1V/1 bit, the analog-to-digital converter 102 converts, for example, the input 10V of the converter, i.e., the machining gap discharge voltage of 100V, into the binary eight-bit digital value of "1100100" and outputs the conversion result. The voltage waveform is sampled per sampling cycle Ts and converted into a digital value, and data Dn at sampling point Pn is stored into address An of the storage device 103.

The direct-current component of the discharge voltage can be represented by $Va = (D0 + D1 + .... + Dn)/n$ assuming that Va is the addition average of digital values D0 to Dn at sampling points P0 to Pn at the time of discharge occurrence. High frequency components at sampling points P0 to Pn can be represented by the absolute values of differences between digital values D0 to Dn and Va, $|D0 - Va|$, $|D1 - Va|$, ...., $|Dn - Va|$, and the average value Vb of the high frequency components can be represented by $Vb = (|D0 - Va| + |D1 - Va| + .. + |Dn - Va|)/n$.

On detection of the start of discharge stop time Toff from the discharge pulse Ton/Toff timing signal 113, the arithmetic device 104 operates on the addition average Va of said digital values D0 to Dn and the average value Vb of the high frequency components using digital values D0 to Dn stored in the storage device 103. The comparator 105 judges the machining status by comparison of data with the reference value generator or reference pattern generator 105. On the assumption that Va1 is the reference value of the direct-current component and Vb1 is the reference value of the high frequency components, the comparator 105 determines that the machining status is stable when direct-current component Va is larger than its reference value Va1 and the machining status is instable when Va is smaller than Va1 and that the machining status is stable when high frequency component average value Vb is larger than its reference value Vb1 and the machining status is instable when Vb is smaller than Vb1.

As a matter of course, the arithmetic device 104 and the comparison judging device 105 composed by different CPUs in said embodiment may also be constituted by a single CPU. Said operation processing and comparison processing are performed during discharge stop time. On detection of discharge occurrence at a next pulse, the conversion processing and storage processing of the next pulse are carried out as in the preceding processings. However, since the operation processing and comparison processing of the previous pulse have ended during discharge stop time, the storage device 103 need not continue to store data D0 to Dn of the preceding pulse and is allowed to overwrite the data of the next pulse on memory, and the memory capacity is sufficient if the data of one pulse can be stored, achieving the machine with the minimum memory capacity.

While the simple addition average was used for the operation of the direct current, component in said embodiment, a general n-degree expression, such as a first-degree expression, represented by, for example, $Va(t) = c1 \times t + c2$ may also be employed. In this case, high frequency component average Vb is represented by $Vb = (|D0 - Va(t)| + .. + |Dn - Va(t)|)/n$ .

Further, the voltage values over the whole time during the discharge were used for calculation in said embodiment may also be replaced by the voltage values within optional time during the discharge as required. Also, while the calculation was made under the control of the computer and software program in said embodiment, it is a matter of course that similar digital calculation may be achieved partly or wholly by a hardware logic circuit. Furthermore, whereas the discharge voltage was directly subjected to analog-to-digital conversion in said embodiment, it is apparent that the analog-to-digital conversion may be made and the result employed for calculation after the machining gap voltage has been introduced to the high-pass filter, resonance circuit, etc., and the alternating-current components or high frequency components of desired frequency fetched.

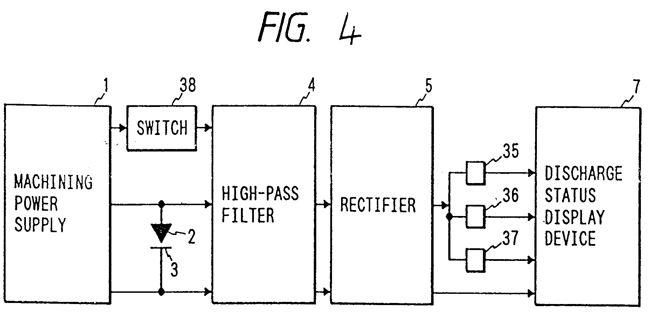

Fig. 3 shows discharge voltage waveforms for the description of the preferred embodiment of the invention, wherein the high frequency components of the discharge voltage waveform 48-A are distributed to be larger in the early stage of discharge pulse Ton time and to be smaller in the final stage. This voltage waveform is valuable information indicating a premonitory phenomenon that machining will be instable. However, when the average value of the high frequency components is operated on and compared with the reference value as in this embodiment, the information on the change of such distribution will be lost. Hence, the arithmetic device 104 operates on and outputs the average value of the high frequency components in the present embodiment, and at the same time, recognizes patterns, in which the high frequency components decrease gradually as shown in waveform 48-A or increase gradually as shown in waveform 48-B, and outputs the result. The comparison judging device 105 compares a pattern with the reference patterns (patterns A, B, etc.) and judges pattern A as a premonitory status indicating that the machining status will be instable and pattern B as a stable machining status.

While the detection of high frequency components in a discharge voltage waveform was described in any of said embodiments, it is apparent that they are also applicable to a discharge current waveform, a machining gap impedance waveform, etc.

In the meantime, it is known in electrical discharge machining that electrical discharge characteristics depend on the electrical conditions set to the machining power supply, such as the pulse width, stop time and discharge peak value, and machining conditions from a machining condition setting device not shown (for example, the material and size of the electrode, the dielectric type, the time when the dielectric was changed last, the cycle of electrode up/down, the servo voltage and the dielectric pressure) and that the high frequency components of the discharge voltage waveform detected at the machining gap differ in amplitude or frequency depending on the same.

Accordingly, in the above described embodiment, the high frequency amplitude measuring parameters, such as the comparison reference value of the comparator, may be changed on the basis of the electrical conditions set to the machining power supply, the machining conditions from the machining condition setting device, and the like. In this case, the embodiment can respond to a wide range of machining conditions.

It will be apparent that the invention, as detailed above, achieves an electrical discharge machining method and a machine therefor which detect an electrical discharge machining status precisely, prevent continuous arcs from being generated in a machining gap, prevent an electrode or a workpiece from being damaged, and improve machining efficiency considerably.

It will also be apparent that the present invention further achieves an electrical discharge machine that offers stable machining and minimizes electrode consumption.

The entire disclosure of each and every foreign patent application from which the benefit of foreign priority has been claimed in the present application is incorporated herein by reference, as if fully set forth.

**Claims**

1.  An electrical discharge machine comprising:

    -   analog-to-digital converting means (102) for sampling a discharge current, voltage or impedance waveform detected between an electrode (2) and a workpiece (3) to make conversion from analog values to digital values ($D_0$ - $D_n$);

- arithmetic means (104) for operating on high frequency components or direct-current components using the digital values ($D_0$ - $D_n$) given by said analog-to-digital converting means (102); and

- comparing means (105) for comparing the output of said arithmetic means with a reference discharge current, voltage or impedance waveform (A, B).

2. An electrical discharge machine according to claim 1, further comprising

- damping means 101) for damping the discharge current, voltage or impedance waveform detected between an electrode (2) and a workpiece (3),

- a machining power supply (1) to carry out electrical discharge machining by generating pulse discharges at a machining gap formed by a machining electrode (2) and a workpiece (3),

- a discharge generation detector (110) generating an output signal based on the detection of a discharge at the machining gap,

- a sample timing generator (107) generating a sample timing signal (108),

- a memory address generator (109) generating memory addresses (A0, A1 to An),

- a storage device (103) to store the digital values ($D_0$ - $D_n$),

- a reference pattern generator (106) for generating the reference discharge current, voltage or impedance waveform.

3. An electrical discharge machining method comprising the following steps;

- sampling a discharge current, voltage or impedance waveform detected between an electrode (2) and a workpiece (3) to make a conversion from analog-values to digital-values ($D_0$ - $D_n$);

- operating on high frequency components or direct-current components using the digital-values ($D_0$ - $D_n$);

- comparing the high frequency components or direct-current components which have been operated on with a reference discharge current, voltage or impedance waveform (A, B).

4. An electrical discharge machining method according to claim 3, further comprising the following steps:

- generating pulse discharges at a machining gap formed by a machining electrode (2) and a workpiece (3);

- generating an output signal based on the detection of a discharge at the machining gap by means of a discharge generation detector (110);

- generating a sample timing signal (108);

- generating memory addresses (A0, A1 to An);

- storing the digital values ($D_0$ - $D_n$);

- generating the reference discharge current, voltage or impedance waveforms (A, B).

**Patentansprüche**

1. Eine Funkenerosionsvorrichtung, umfassend:

- Analog/Digital-Umwandlereinrichtungen (102) zum Abtasten eines Entladestromes, Spannung- oder Impedanzewellenform, die zwischen einer Elektrode (2) und einem Werkstück (3) erfaßt werden, um eine Umwandlung von analogen Werten in digitale Werte ($D_0$ -$D_n$) durchzuführen

- arithmetische Einrichtungen (107) zum Weiterverarbeiten von Hochfrequenzkomponenten oder Direktstromkomponenten, unter Verwendung der digitalen Werte ($D_0$ - $D_n$), die durch die Analog/Digital-Umwandlereinrichtung (102) gegeben sind; und

- Vergleichseinrichtungen (105) zum Vergleichen der Ausgabe der arithmetischen Einrichtungen mit einem Referenzentladestrom, Spannung- oder Impedanzwellenform (A, B).

2. Eine Funkenerosionsvorrichtung nach Anspruch 1, ferner umfassend

- Dämpfungseinrichtungen (101) zum Dämpfen des Entladestromes, Spannung- oder Impedanzwellenform, die zwischen einer Elektrode (2) und einem Werkstück (3) erfaßt werden,

- eine Energieversorgung für eine Bearbeitung (1) zum Durchführen einer Funkenerosion durch Erzeugen von Pulsentladungen an einem Bearbeitungsspalt, der durch eine Bearbeitungselektrode (2) und ein Werkstück (3) gebildet wird,

- einen Entladeerzeugungsdetektor (110), der ein Ausgabesignal basierend auf der Erfassung einer Entladung an dem Bearbeitungsspalt erzeugt,

- ein Abtastzeitgenerator (107), der ein Abtastzeitsignal (108) erzeugt,

- ein Speicheradreßgenerator (109), der Speicheradressen (A0, A1 bis An) erzeugt,

- eine Speichereinrichtung (103) zum Speichern der digitalen Werte ($D_0$ - $D_n$),

- einen Referenzstrukturgenerator (106) zum Erzeugen des Referenzentladestromes, Spannung- oder Impedanzwellenform.

3. Ein Funkenerosionsverfahren umfassend die folgenden Schritte:

- Abtasten eines Entladestromes, Spannung- oder Impedanzwellenform, die zwischen einer Elektrode (2) und einem Werkstück (3) erfaßt werden, um eine Umwandlung von analogen Werten in digitale Werte ($D_0$ - $D_n$) durchzuführen;

- Weiterverarbeiten von Hochfrequenzkomponenten oder Direktstromkomponenten, unter Verwendung der digitalen Werte ($D_0$ - $D_n$);

- Vergleichen der Hochfrequenzkomponenten oder Direktstromkomponenten, die weiterverarbeitet worden sind mit einem Referenzentladestrom, Spannung- oder Impedanzwellenform (A, B).

4. Ein Funkenerosionsverfahren nach Anspruch 3, ferner umfassend die folgenden Schritte:

- Erzeugen von Pulsentladungen an einem Bearbeitungsspalt, der durch eine Bearbeitungselektrode (2) und ein Werkstück (3) gebildet wird;

- Erzeugen eines Ausgabesignales basierend auf der Erfassung einer Entladung an dem Bearbeitungsspalt mittels eines Entladeerzeugungsdetektors (110);

- Erzeugen eines Abtastzeitsignals (108);

- Erzeugen von Speicheradressen (A0, A1 bis An);

- Speichern der digitalen Werte ($D_0$ - $D_n$);

- Erzeugen des Referenzentladestromes, Spannung- oder Impedanzwellenformen (A, B).

**Revendications**

1. Machine d'électroérosion comportant:

- un moyen de conversion analogique-numérique (102) pour échantillonner une forme d'onde de courant, de tension ou d'impédance de décharge, détectée entre une électrode (2) et une pièce (3), pour convertir des valeurs analogiques en valeurs numériques ($D_0$-$D_n$);
- un moyen arithmétique (104) pour agir sur les composantes à haute fréquence ou les composantes de courant continu en utilisant les valeurs numériques ($D_0$-$D_n$) données par ledit moyen (102) de conversion analogique-numérique; et
- un moyen de comparaison (105) pour comparer la sortie du dit moyen arithmétique à une forme d'onde (A, B) de référence de courant, de tension ou d'impédance de décharge.

2. Machine d'électroérosion selon la revendication 1, comportant en outre:

- un moyen d'amortissement (101) pour amortir la forme d'onde de courant, de tension ou d'impédance de décharge détectée entre une électrode (2) et une pièce (3),
- une alimentation (1) en énergie d'usinage pour exécuter l'usinage par électroérosion en produisant des décharges pulsées sur un interstice d'usinage formé entre une électrode d'usinage (2) et une pièce (3),
- un détecteur (110) de la production de décharges, qui produit un signal de sortie sur base de la détection d'une décharge dans l'interstice d'usinage,
- un générateur (107) de rythme d'échantillonnage pour produire un signal (108) de rythme d'échantillonnage,
- un générateur (109) d'adresses de mémoire produisant des adresses de mémoire (A0, A1 à An),
- un dispositif de mémorisation (103) pour mémoriser les valeurs numériques ($D_0$-$D_n$),
- un générateur (106) de forme de référence pour produire la forme d'onde de courant, de tension ou d'impédance de décharge de référence.

3. Procédé d'usinage par électroérosion comportant les étapes ci-dessous:

- échantillonner une forme d'onde de courant, de tension ou d'impédance de décharge détectée entre une électrode (2) et une pièce (3), pour convertir des valeurs analogiques en valeurs numériques ($D_0$-$D_n$);
- agir sur les composantes à haute fréquence ou sur les composantes en courant continu à l'aide des valeurs numériques ($D_0$-$D_n$);
- comparer les composantes à haute fréquence ou les composantes en courant continu sur lesquelles une action a été entreprise, à une forme d'onde (A, B) de courant, de tension ou d'impédance de décharge de référence.

4. Procédé d'usinage par électroérosion selon la revendication 3, comportant en outre les étapes suivantes:

- produire des décharges pulsées dans un interstice d'usinage formé par une électrode d'usinage (2) et une pièce (3);
- produire un signal de sortie sur base de la détection d'une décharge dans l'interstice d'usinage, au moyen d'un détecteur (110) de production de décharge;
- produire un signal (108) de rythme d'échantillonnage;
- produire des adresses de mémoire (A0, A1 à An);
- mémoriser les valeurs numériques ($D_0$-$D_n$);
- produire les formes d'onde (A, B) de courant, de tension ou d'impédance de décharge de référence.

FIG. 1

## FIG. 2

## FIG. 3

PATTERN A

PATTERN B

# FIG. 4